Europäisches Patentamt

European Patent Office

Office européen des brevets

(11) Publication number: **0 316 150 B1**

(19)

(12) **EUROPEAN PATENT SPECIFICATION**

(45) Date of publication of patent specification: **22.02.95**

(51) Int. Cl.⁶: **C08G 18/10**, C08G 18/32, C08G 18/38, C08G 18/76

(21) Application number: **88310537.1**

(22) Date of filing: **09.11.88**

Divisional application 94201292.3 filed on 09/11/88.

The file contains technical information submitted after the application was filed and not included in this specification

(54) **Thermosetting urethane elastomer.**

(30) Priority: **11.11.87 JP 282999/87**

(43) Date of publication of application: **17.05.89 Bulletin 89/20**

(45) Publication of the grant of the patent: **22.02.95 Bulletin 95/08**

(84) Designated Contracting States: **DE FR GB**

(56) References cited:
**EP-A- 0 135 111**
**EP-A- 0 240 118**
**FR-A- 1 185 779**
**FR-A- 1 339 799**

(73) Proprietor: **NIPPON POLYURETHANE INDUS-TRY CO. LTD.**
**2-8, Toranomon 1-chome**
**Minato-ku**
**Tokyo (JP)**

(72) Inventor: **Kawasaki, Masahiro**
**3434-20, Totsuka-cho**
**Totsuka-ku**
**Yokohama-shi**
**Kanagawa-ken (JP)**
Inventor: **Ohbuchi, Yukio**
**22-33, Gumisawa 7-chome**
**Totsuka-ku**
**Yokohama-shi**
**Kanagawa-ken (JP)**
Inventor: **Maeda, Yoshiaki**
**23-13, Kaminagaya 5-chome**
**Konan-ku**
**Yokohama-shi**
**Kanagawa-ken (JP)**
Inventor: **Sato, Susumu**
**2-6 Tsunashima Higashi 3-chome**
**Kohoku-ku**
**Yokohama-shi**
**Kanagawa-ken (JP)**

(74) Representative: **West, Alan Harry et al**
**R.G.C. Jenkins & Co.**
**26 Caxton Street**
**London SW1H 0RJ (GB)**

**Description**

This invention relates to a thermosetting urethane elastomer, more particularly to a thermosetting urethane elastomer prepared from a prepolymer containing terminal isocyanate groups obtained from p-phenylene diisocyanate (hereinafter abbreviated to PPDI) and a polyol, and a curing agent comprising specific polyols.

Thermosetting urethane elastomers are generally produced (a) by curing a prepolymer containing terminal isocyanate groups and derived from a diisocyanate such as tolylene diisocyanate, diphenylmethane diisocyanate (hereinafter abbreviated to MDI) or hexamethylene diisocyanate, and a polyol such as polyether polyol, polyester polyol or polycaprolactone polyol, using a glycol such as 1,4-butylene glycol (hereinafter abbreviated to 1,4-BG) or an amine such as 3,3'-dichloro-4,4'-diaminodiphenyl-methane, or (b) by rapidly curing an unstable prepolymer derived from 1,5-naphthalene diisocyanate (hereinafter abbreviated to NDI) and a polyester polyol, with a glycol such as 1,4-BG.

These thermosetting urethane elastomers are highly elastic, having excellent tensile strength, and have been widely used for rolls, solid tires and belts. However, the elastomer obtained in method (a) is inferior in heat resistance, has a hardness greatly dependent on temperature, and is therefore unsuitable for use in environments subjected to elevated temperatures or to large changes of temperature. In contrast, the prepolymer obtained in method (b) has excellent heat resistance, but since it is obtained from an unstable prepolymer, drawbacks are involved in the equipment used for its production and in the time restrictions involved.

Amongst other patent publications in this area, EP-A-0135111 for example, describes the production of thermoplasticly processable branched polyurethanes based on NDI. They are produced by reacting another diisocyanate such as MDI with a stoichiometric excess of a long-chain polyol to form an OH-prepolymer, reacting the latter with an excess of NDI to form an NCO-prepolymer, and reacting that product with a chain lengthening polyol such as a mixture of hydroquinone-di-($\beta$-hydroxyethylether) and trimethylolpropane.

Also, FR-A-1339799 describes a procedure performing polyurethane coatings for electrical conductors, in which an aromatic polyisocyanate such as MDI is reacted with an alkyl aromatic diol such as hydroquinone bis-(2-hydroxyethyl)ether and a triol such as trimethylolpropane. Further EP-A-0240118 concerns a fibre-reinforced curable polyurethane matrix of a diisocyanate selected from p- and m-phenyl diisocyanates, 1,4-cyclohexyl diisocyanate, tetramethylxylyl diisocyanate and MDI, a polyol/polythiol and a diol/dithiol curing agent.

The present invention which seeks to improve the heat resistance and temperature variation in physical properties of thermosetting urethane elastomers is derived from intensive investigations on combinations of various prepolymers containing terminal isocyanate groups and derived from diisocyanate and polyol, with various curing agents, and is based on the discovery that such properties can be improved by use of a combination of a specific diisocyanate with a specific curing agent.

According to the invention, there is now provided a thermosetting urethane elastomer prepared from:

(a) a prepolymer having from 2 to 20 weight % terminal isocyanate groups obtained by allowing p-phenylene diisocyanate to react with a compound having 2 or more active hydrogen atoms and an average molecular weight from 1,000 to 6,000; and

(b) as curing agent, 1,4-bis(2-hydroxyethoxy)benzene and trimethylolpropane in a molar ratio of 9.5 : 0.5 to 1 : 9.

As the result of investigations on the starting materials for improving the heat resistance of thermosetting urethane elastomers, it has been found that PPDI is the diisocyanate of choice. PPDI is an aromatic diisocyanate having isocyanate groups at the 1- and 4-positions on the benzene ring, and its melting point is 95 °C.

A prepolymer containing terminal isocyanate groups obtained from PPDI and polyol was cured with various curing agents, and heat resistance and temperature dependency, of the cured products were measured. As a result, the use of BHEB and TMP as the curing agents led to a thermosetting urethane elastomer having excellent physical properties being obtained.

A thermosetting urethane elastomer consisting only of the prepolymer and BHEB, although excellent in heat resistance, has the drawback that its compression set is large. The thermosetting urethane elastomer according to the present invention has improved compression set and simultaneously improved heat resistance.

Compounds having two or more active hydrogens which can be used for obtaining the prepolymer having terminal isocyanate groups have an average molecular weight of 1000 to 6000, preferably 1000 to 3000. Among them are polyester polyols, polyether polyols, polycarbonate polyols and polyacrylic polyols.

As the polyester polyol, there may be employed polyester polyols obtained by polycondensation of glycol such as ethylene glycol, 1,2-propylene glycol, 1,3-propylene glycol, 1,3-butylene glycol, 1,4-BG, 2,2-dimethyl-1,3-propane diol, diethylene glycol, 1,5-pentane diol, 3-methyl-1,5-pentane diol, 1,6-hexane diol, cyclohexane-1,4-diol and cyclohexane-1,4-dimethanol, alone or as a mixture with a dibasic acid such as succinic acid, maleic acid, adipic acid, glutaric acid, pimellic acid, suberic acid, azelaic acid, sebacic acid, phthalic acid, isophthalic acid, terephthalic acid, hexahydrophthalic acid and hexahydroisophthalic acid, alone or as a mixture and their acid esters and acid halides and mixtures of the polyester polyols and the glycols, and further lactone type polyols such as polycaprolactone diols obtained by subjecting lactones such as $\epsilon$-caprolactone to ring-opening addition polymerization in the presence of a glycol.

As the polyether polyol, there may be employed hydroxyl-containing polyether polyols made by the addition polymerization of alkylene oxide such as ethylene oxide and propylene oxide, to glycols such as ethylene glycol, 1,2-propylene glycol, diethylene glycol and polyethylene glycol, polyols having 3 or more functional groups such as glycerine, trimethylolethane, TMP and pentaerythritol, polyamines such as ethylenediamine and toluenediamine, either alone or as a mixture of two or more.

Further, the polycarbonate polyol can be obtained by the reaction of a dialkyl carbonate, an alkylene carbonate or a diaryl carbonate, with a hydroxyl compound, for example, 1,4-BG and 1,6-hexane diol, and these can be also used either alone or as a mixture of two or more.

The mole ratio of BHEB and TMP ranges from 9.5:0.5 to 1:9, preferably from 9:1 to 2:8. The ratio influences various physical properties of the thermosetting urethane elastomer such as hardness, tensile strength and compression set. Accordingly, any thermosetting urethane elastomer having desired properties can be prepared by changing the above ratio.

The preparation of the prepolymer having terminal isocyanate groups can be practiced as follows.

(A) By use of a twin-screw extruder, solid PPDI and a liquid polyol are fed quantitatively at a predetermined molar ratio at a cylinder temperature of 70 to 180 °C for continuous synthesis.

(B) A predetermined amount of a polyol is charged into a reaction batch, and after adjustment of temperature to 100 to 130 °C, a predetermined amount of solid PPDI is charged and synthesis is carried out while stirring.

(C) A predetermined amount of solid PPDI and a part of a polyol are charged into a reaction batch, and while the reaction is carried out at 70 to 100 °C the remainder of the polyol is charged in several portions, and synthesis is carried out while repeating the reaction.

It is required that the reaction between the organic polyisocyanate and the active hydrogen-containing compound should be conducted so that the isocyanate content in the prepolymer should be 2 to 20% by weight, preferably 3 to 10% by weight. If the isocyanate content in the prepolymer is greater than 20% by weight, the amount of free PPDI is excessive and the prepolymer will have inferior storage stability. On the other hand, if it is smaller than 2% by weight, the isocyanate content as the prepolymer is low and its viscosity becomes very high, and the prepolymer can then be handled only with difficulty.

The thermosetting urethane elastomer of the present invention is preferably prepared by setting the NCO equivalent of the prepolymer and the OH equivalent of the curing agent at a ratio of 1 : 0.8 to 1 : 0.95, adjusting the prepolymer temperature to 110 to 130 °C, the curing agent temperature at 110 to 120 °C and the mold temperature at 120 to 130 °C, stirring predetermined amounts of the prepolymer and the curing agents, and degassing the mixture under reduced pressure prior to casting into the mold, followed by heating for 8 to 15 hours. When a dispersing machine is to be used, it is necessary to perform degassing under reduced pressure before mixing the prepolymer with the curing agent.

According to the present invention, heat resistance and the temperature reduction of physical properties which have been the drawbacks of known thermosetting urethane elastomer, can be improved by a composition comprising a prepolymer containing terminal isocyanate groups by use of PPDI as the diisocyanate and, as the curing agents, BHEB and TMP. Particularly, compression set which has been deemed to be improved only with difficultly, can also be improved to better than the performance exhibited by the thermosetting urethane elastomer of the prior art.

The thermosetting urethane elastomer of the present invention finds uses in environments involving elevated temperatures or great temperature changes where known thermosetting urethane elastomers could not be employed. Specific examples of such uses may include rolls for paper making, printing rolls and rolls for other OA instruments, cleaning blades, belts, O-rings, sealing materials such as bushes, vibration insulators, solid tires, wheels for casters, and snow plows.

The present invention is described below in more detail by the following Examples. In the Examples, "parts" and "%" are respectively "parts by weight" and "% by weight", unless otherwise noted.

Example 1

Synthesis of prepolymer:

PPDI (which is solid at ordinary temperature) at a rate of 0.288 mol/min. and a polycaprolactone polyol (average molecular weight 2000, functionality 2) heated to 80 °C at a rate of 0.144 mol/min. were fed into a twin-screw extruder rotating at 150 rpm, with cylinder temperatures of 80 °C at the feed portion, 120 to 150 °C at the middle portion and 80 °C at the outlet portion, to obtain a prepolymer. The prepolymer was found to have an NCO content of 3.6%.

Resin formation:

BHEB/TMP at a weight ratio of 5.80/1.00 was completely mixed and dissolved at 120 °C to provide a curing agent.

The above prepolymer and the curing agent were adjusted to 110 °C and a mold to 120 °C, 100 g of the prepolymer and 6.8 g of the curing agent were well stirred and poured into the mold after degassing under reduced pressure. After casting, heating was effected at 120 °C for 10 hours to obtain a thermosetting urethane elastomer. The urethane elastomer was left to stand at 25 °C for 7 days, and then subjected to various tests. The results are shown in Table 1 (physical properties), Table 2 (heat aging test), and Table 3 (temperature dependency of hardness).

Example 2

Synthesis of prepolymer:

PPDI at a rate of 0.505 mol/min. and a polytetramethylene glycol (average molecular weight 1000, functionality 2) heated to 80 °C at a rate of 0.253 mol/min. were fed into a twin-screw extruder rotating at 150 rpm, with cylinder temperatures of 80 °C at the feed portion, 120 to 150 °C at the middle portion and 80 °C at the outlet portion, to obtain a prepolymer. The prepolymer was found to have an NCO content of 6.3%.

Resin formation:

By use of the curing agent in Example 1, the above prepolymer and the curing agent were adjusted to 110 °C and a mold to 120 °C, 100 g of the prepolymer and 12.0 g of the curing agent were well stirred and poured into the mold after degassing under reduced pressure. After casting, heating was effected at 120 °C for 10 hours to obtain a thermosetting urethane elastomer. The urethane elastomer was left to stand at 25 °C for 7 days, and then subjected to various tests. The results are shown in Table 1 to Table 3.

Comparative example 1

As the prepolymer, the same prepolymer as in Example 1 was employed.

Resin formation:

The prepolymer was adjusted to 75 °C, 1,4-BG to 25 °C and a mold to 120 °C, and 100 g of the prepolymer and 3.7 g of 1,4-BG were well stirred and poured into the mold after degassing under reduced pressure. After casting, heating was effected at 120 °C for 5 hours to obtain a thermosetting urethane elastomer. The urethane elastomer was left to stand at 25 °C for 7 days, and then subjected to various tests. The results are shown in Table 1 to Table 3.

Comparative example 2

As the prepolymer, the same prepolymer as in Example 2 was employed.

Resin formation:

Under the same temperature conditions as in Comparative example 1, 100 g of the prepolymer and 6.4 g of 1,4-BG were well stirred and poured into the mold after degassing under reduced pressure. After casting, heating was effected at 120 °C for 5 hours to obtain a thermosetting urethane elastomer. The urethane elastomer was left to stand at 25 °C for 7 days, and then subjected to various tests. The results are shown in Table 1 to Table 3.

Comparative example 3

Synthesis of prepolymer:

Into a four-necked round bottomed flask equipped with a stirrer, a thermometer and a pipe for nitrogen atmosphere, 2.00 mol of MDI and 1.00 mol of a polycaprolactone polyol (average molecular weight 1000, functionality 2) were charged and the reaction was carried out under nitrogen at 65 to 75 °C for 3 hours. The prepolymer obtained was found to have an NCO content of 5.6%.

Resin formation:

Under the same temperature conditions as in Comparative example 1, 100 g of the prepolymer and 5.7 g of 1,4-BG were well stirred and poured into the mold after degassing under reduced pressure. After casting, heating was effected at 120 °C for 5 hours to obtain a thermosetting urethane elastomer. The urethane elastomer was left to stand at 25 °C for 7 days, and then subjected to various tests. The results are shown in Table 1 to Table 3.

Comparative example 4

Into the same round bottomed flask as in Comparative example 3 was charged 1.00 mol of a polyethylene adipate (average molecular weight 2000, functionality 2) and the temperature was adjusted to 120 °C. To the polyethylene adipate was added 2.00 mol of solid NDI, and the reaction was carried out under stirring without heating until the temperature fell to 90 °C. The prepolymer obtained was found to have an NCO content of 3.5%.

Resin formation:

The prepolymer was adjusted to 100 °C, 1,4-BG to 25 °C and a mold to 120 °C, and 100 g of the prepolymer and 3.6 g of 1,4-BG were well stirred and poured into the mold after degassing under reduced pressure. After casting, heating was effected at 120 °C for 5 hours to obtain a thermosetting urethane elastomer. The urethane elastomer was left to stand at 25 °C for 7 days, and then subjected to various tests. The results are shown in Table 1 to Table 3.

Comparative example 5

Synthesis of prepolymer:

The prepolymer obtained in Comparative example 3 was used.

Resin formation:

By use of the curing agent of Example 1, and similarly under the same temperature conditions as in Example 1, 100 g of the prepolymer and 10.3 g of the curing agent were well stirred and poured into the mold after degassing under reduced pressure. After casting, heating was effected at 120 °C for 10 hours to obtain a thermosetting urethane elastomer. The urethane elastomer was left to stand at 25 °C for 7 days, and then subjected to various tests. The results are shown in Table 1 to Table 3.

5

Example 3

Synthesis of prepolymer

PPDI at a rate of 0.437 mol/min. and a polycaprolactone polyol (average molecular weight 1200, functional group number 2) heated to 80°C at a rate of 0.219 mol/min. were fed into a twin-screw extruder rotating at 150 rpm, with cylinder temperatures of 80°C at the feed portion, 120 to 150°C at the middle portion and 80°C at the outlet portion, to obtain a prepolymer. The prepolymer was found to have an NCO content of 5.5 %.

Example 4

Synthesis of prepolymer

The prepolymer obtained in Example 3 was used.

Examples 5 and 6

Synthesis of prepolymer

The prepolymer obtained in Example 1 was used.

Examples 3-6

Resin formation

Resin formation in Examples 3-6 was carried out at various prepolymer/curing agent ratios and at various BHEB/TMP ratios, as shown in Table 4. The procedure for mold casting and the conditions after molding were the same as in Example 1. Table 5 shows the physical properties of the thermosetting urethane elastomers obtained in Examples 3-6.

Table 1

| Item \ No. | Example | | Comparative example | | | | |
|---|---|---|---|---|---|---|---|
| | 1 | 2 | 1 | 2 | 3 | 4 | 5 |
| Hardness (JIS.A) | 85 | 94 | 92 | 97 | 82 | 91 | ·89 |
| 100% Modulus (Kg/cm$^2$) | 59 | 121 | 86 | 125 | 85 | 69 | 77 |
| 300% Modulus (Kg/cm$^2$) | 165 | 213 | 113 | 149 | 165 | 100 | 224 |
| Tensile strength (Kg/cm$^2$) | 427 | 217 | 387 | 352 | 519 | 361 | 525 |
| Elongation (%) | 380 | 300 | 830 | 780 | 600 | 850 | 380 |
| Tear strength [1] (Kg/cm) | 68 | 82 | 139 | 133 | 140 | 112 | 69 |
| Compression set [2] (%) | 29 | 29 | 45 | 34 | 35 | 29 | 41 |
| Bashore Rebound elasticity (%) | 73 | 67 | 69 | 66 | 43 | 55 | 21 |

Measurement method : according to JIS K-6301
1) Test strip : B-type
2) Conditions: 25% compression, 70°C x 22Hr

EP 0 316 150 B1

.Table 2

| | Lapse of time | 3 days | 1 week | 2 weeks | 4 weeks | 8 weeks |
|---|---|---|---|---|---|---|
| Example | 1 | 109.0 | 100.4 | 83.8 | 52.4 | 48.4. |
| | 2 | 74.3 | 55.4 | 45.0 | 39.9 | 35.1 |
| Comparative example | 1 | 82.5 | 50.8 | 34.9 | 33.6 | 21.1 |
| | 2 | 53.3 | 31.6 | 24.5 | 22.2 | 18.5 |
| | 3 | 70.4 | 43.3 | 29.2 | 20.0 | 17.5 |
| | 4 | 89.9 | 68.3 | 35.5 | 35.0 | 33.3 |
| | 5 | 103.1 | 96.2 | 62.9 | 31.2 | 20.0 |

Measurement method : according to JIS K-6301
Heat aging test (150°C), Tensile strength retentivity

EP 0 316 150 B1

Table 3

| Measurement temperature | Example | | Comparative example | | | | |
|---|---|---|---|---|---|---|---|
| No | 1 | 2 | 1 | 2 | 3 | 4 | 5 |
| -25°C | 90 | 95 | 99 | 98 | 93 | 94 | 99 |
| 25°C | 85 | 94 | 92 | 97 | 82 | 91 | 89 |
| 70°C | 82 | 94 | 90 | 95 | 77 | 88 | 84 |
| 120°C | 81 | 93 | 89 | 93 | 74 | 87 | 80 |
| 150°C | 79 | 93 | 84 | 90 | 67 | 81 | 75 |

Hardness (JIS.A)

Measurement method : according to JIS K-6301

9

Table 4

| No. | | Example | | | |
|---|---|---|---|---|---|
| | | 5 | 6 | 7 | 8 |
| Curing agent | Composition | BHEB / TMP | BHEB / TMP | BHEB / TMP | BHEB / TMP |
| | Ratio by weight (The value in parentheses shows mole ratio) | 13.29/1.00 (9/1) | 5.90/1,00 (8/2) | 3.44/1.00 (7/3) | 1.48/1.00 (5/5) |
| Resin formation | Prepolymer (parts) | 100 | 100 | 100 | 100 |
| | Curing agent (parts) | 11.4 | 10.5 | 6.3 | 5.4 |

Table 5

| Item \ No. | Example | | | |
|---|---|---|---|---|
| | 5 | 6 | 7 | 8 |
| Prepolymer | PCL-1200/ PPDI (R=2) | PCL-1200/ PPDI (R=2) | The same as in Example 1 | The same as in Example 1 |
| Curing agent (mole ratio) | BHEB/TMP = 9/1 | BHEB/TMP = 8/2 | BHEB/TMP = 7/3 | BHEB/TMP = 5/5 |
| Hardness (JIS·A) | 95 | 90 | 80 | 70 |
| 100% Modulus $(kg/cm^2)$ | 99 | 93 | 48 | 28 |
| 300% Modulus $(kg/cm^2)$ | 129 | 149 | 201 | —— |
| Tensile strength $(kg/cm^2)$ | 631 | 524 | 286 | 140 |
| Elongation (%) | 500 | 450 | 330 | 270 |
| Tear strength [1] (kg/cm) | 111 | 89 | 57 | 34 |
| Compression set (%) | 23 | 17 | 24 | 8 |
| Bounce impact elasticity (%) | 65 | 64 | 72 | 71 |

*The test conditions are the same as that in Table 1.

## Claims

1.  A thermosetting urethane elastomer prepared from:

(a) a prepolymer having from 2 to 20 weight % terminal isocyanate groups obtained by allowing p-phenylene diisocyanate to react with a compound having 2 or more active hydrogen atoms and an average molecular weight from 1,000 to 6,000; and

(b) as curing agent, 1,4-bis(2-hydroxyethoxy)benzene and trimethylolpropane in a molar ratio of 9.5 : 0.5 to 1 : 9.

2.  A thermosetting urethane elastomer according to claim 1, wherein the prepolymer has from 3 to 10 weight % terminal isocyanate groups.

3.  A thermosetting urethane elastomer according to claim 1 or claim 2, wherein the ratio of NCO equivalents in the prepolymer : OH equivalents in the curing agents is 1 : 0.8 to 1 : 0.95.

**Patentansprüche**

1.  Wärmehärtbares Urethanelastomer, hergestellt aus:

(a) einem Praepolymer mit 2 bis 20 Gew.-% Isocyanatendgruppen, erhalten durch Reagierenlassen von p-Phenylendiisocyanat mit einer Verbindung mit 2 oder mehr aktiven Wasserstoffatomen und mit einem mittleren Molekulargewicht von 1000 bis 6000; und

(b) 1,4-Bis(2-hydroxyethoxy)benzol und Trimethylolpropan in einem Molverhältnis von 9,5:0,5 bis 1:9 als Härtungsmittel.

2.  Wärmehärtbares Urethanelastomer nach Anspruch 1, wobei das Praepolymer 3 bis 10 Gew.-% Isocyanatendgruppen aufweist.

3.  Wärmehärtbares Urethanelastomer nach Anspruch 1 oder 2, wobei das Verhältnis der NCO-Äquivalente in dem Praepolymer zu den OH-Äquivalenten in den Härtungsmitteln 1:0,8 bis 1:0,95 ist.

**Revendications**

1.  Elastomère d'uréthanne thermodurcissable préparé à partir :

(a) d'un prépolymère ayant 2 à 20 % en poids de groupes isocyanate terminaux, obtenu en laissant du diisocyanate de p-phénylène réagir avec un composé ayant 2 ou plus de 2 atomes d'hydrogène actifs et ayant un poids moléculaire moyen de 1000 à 6000 ; et

(b) comme durcisseur, de 1,4-bis-(2-hydroxyéthoxy)benzène et de triméthylolpropane en un rapport molaire de 9,5:0,5 à 1:9.

2.  Elastomère d'uréthanne thermodurcissable suivant la revendication 1, dans lequel le prépolymère possède 3 à 10 % en poids de groupes isocyanate terminaux.

3.  Elastomère d'uréthanne thermodurcissable suivant la revendication 1 ou la revendication 2, dans lequel le rapport des équivalents de groupes NCO dans le prépolymère aux équivalents de groupes OH dans les durcisseurs est compris dans l'intervalle de 1:0,8 à 1:0,95.